# EUROPEAN PATENT SPECIFICATION

(11) **EP 2 730 798 B1**
(45) Date of publication and mention of the grant of the patent: **03.01.2018**
(21) Application number: 13192018.3
(22) Date of filing: 07.11.2013
(51) Int. Cl.: F16D 69/04, F16D 65/092

(54) **Railway vehicle disk brake pad**
Schienenfahrzeugscheibenbremsbelag
Plaquette de frein à disque de véhicule ferroviaire

(30) Priority: 07.11.2012 IT RM20120542
(43) Date of publication of application: 14.05.2014
(73) Proprietor: Cofren S.r.l., Avellino (IT)
(72) Inventor: De Soccio, Vittorio, 82100 BENEVENTO (IT)
(74) Representative: Bosman, Cesare

(56) References cited:
- EP-A1- 1 318 321
- EP-A2- 2 320 106
- WO-A1-02/073059
- DE-U1- 8 514 607
- US-A- 5 934 418

## Description

The present invention relates to a railway vehicle disk brake pad. A pad as disclosed in the preamble of claim 1 is for instance known from WO-A-02/073059. As is known, disk brakes are subject to severe stress, and optimum braking performance requires that the braking force be transmitted effectively from the pad to the disk.

For some time now, increasing use has been made of pads with a number of small friction elements, as opposed to one large one. In one such solution, the pad comprises a main mounting plate; a number of supporting plates fixed to the mounting plate; and a number of friction elements fixed individually or in pairs to respective supporting plates.

When braking, in addition to exerting effective pressure on the disk, the pads must also ensure a low noise level, which is now an important issue when it comes to selecting which type of disk brakes to employ.

As will be clear to anyone skilled in the art, both the above requirements are closely related to the way in which the friction elements exert pressure on the disk.

Recent solutions employ a number of elastic elements, each located between the mounting plate and a respective supporting plate. In other words, each supporting plate is fitted with a single elastic element.

Though the elastic elements have brought about a big improvement in noise reduction when braking, the complexity of these solutions and increasing demand for even better noise reduction have led to a demand within the industry for more effective solutions.

The Applicant has devised a pad solution designed to ensure highly effective braking, combined with low noise and easy manufacture.

According to the present invention, there is provided a railway vehicle disk brake pad with the main characteristics defined in Claim 1, and the preferred and/or secondary characteristics defined in Claims 2-7.

A non-limiting embodiment of the invention will be described by way of example with reference to the attached drawings, in which:
Figure 1 shows a partly transparent plan view of the pad according to the present invention;
Figure 2 shows a cross section along line I-I in Figure 1;
Figure 3 shows a plan view of part of the Figure 1 pad;
Figure 4 shows a cross section along line II-II in Figure 3;
Figure 5 shows a plan view of a further part of the Figure 1 pad;
Figure 6 shows a cross section along line III-III in Figure 5.

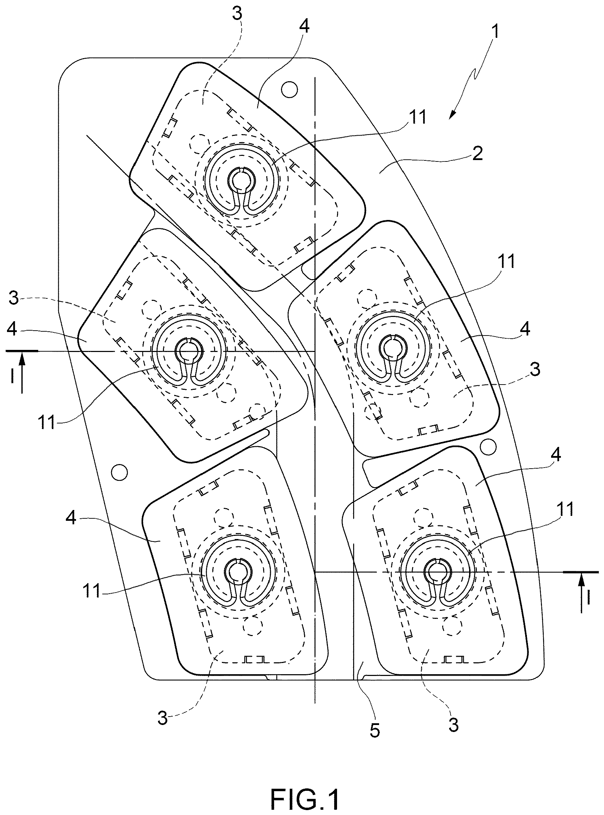

Number 1 in Figure 1 indicates as a whole a pad in accordance with the present invention.

Pad 1 comprises a base plate 2; five supporting plates 3 fitted to base plate 2; and five friction elements 4, each fixed to a respective supporting plate 3.

Pad 1 also comprises one elastic plate 5 interposed between base plate 2 and all the supporting plates 3.

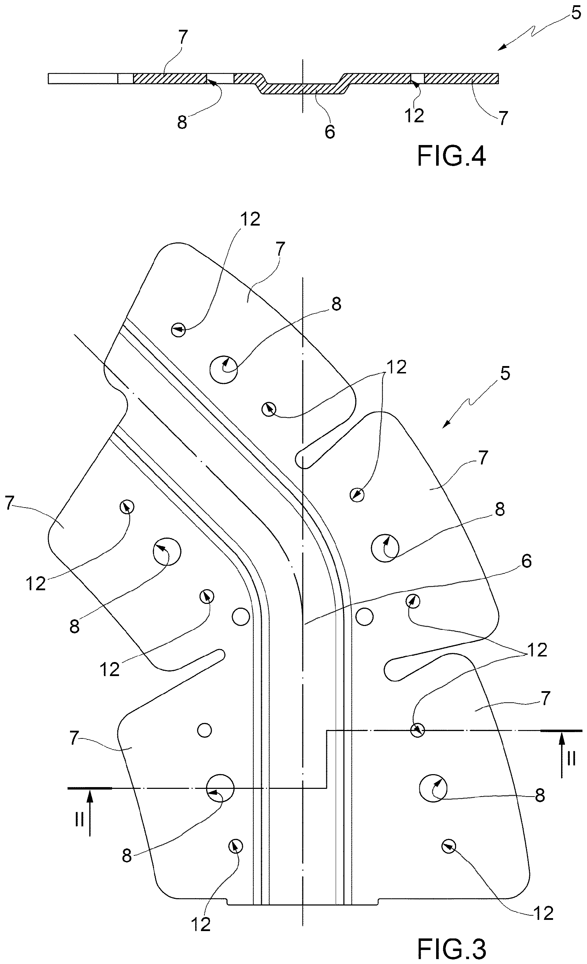

As shown in Figures 3 and 4, elastic plate 5 comprises a centre rib 6 fixed directly to base plate 2; and five elastic tabs 7 projecting from centre rib 6 and detached from base plate 2 to achieve the desired elastic effect.

In the example described, as opposed to being straight, centre rib 6 is bent slightly, and the elastic tabs are of different shapes. These two features derive from the friction elements having to assume given positions with respect to the disk on which the pad acts. More specifically, each friction element 4 must assume a position in which its two parallel, curved long sides form a substantially zero angle with the concentrics of the disk on which friction is exerted. The Applicant has observed, in fact, that this arrangement of the friction elements provides for a high degree of effectiveness in terms of both braking and noise level.

More specifically, centre rib 6 in the example described has a 45° bend, and the elastic tabs are of different shapes to comply with the above position requirements.

The particular shape of the elastic plate, to comply with the above position requirements, is one particular, preferred embodiment which is in no way intended to limit the protective scope of the present patent application.

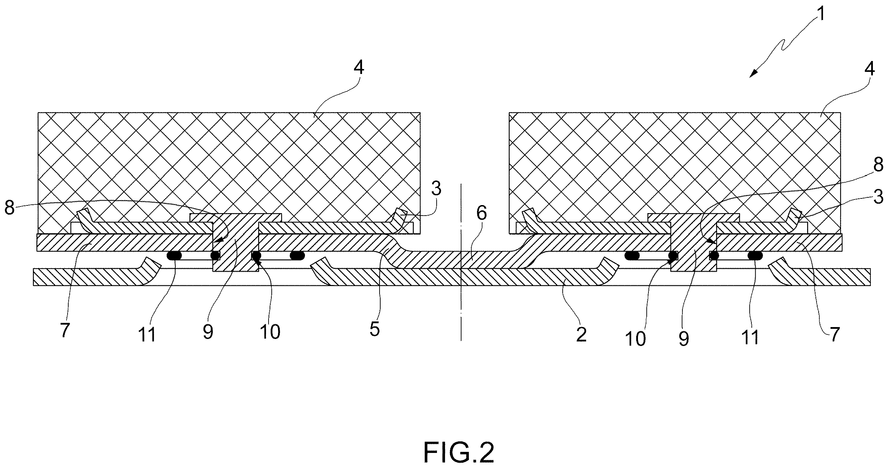

Each elastic tab 7 has a centre hole 8 for housing a fastening pin 9 for fastening a respective supporting plate 3. Fastening pin 9 has a radial groove 10 which is engaged by a lock spring 11. More specifically, pin 9 is housed inside centre hole 8 so that radial groove 10 projects from elastic tab 7 (as shown in Figure 2).

Lock spring 11 provides for connecting and disconnecting supporting plate 3 easily to and from elastic plate 5. Reversible connection of supporting plates 3 to elastic plate 5 is an important advantage as compared with known pads, in which the supporting plate, fitted with the friction element, is normally riveted irreversibly to the underlying elastic element, with the result that, once the friction material wears down or for any other reason must be replaced, the respective elastic element must also be replaced with it. With the pad according to the present invention, on the other hand, only the supporting plate/friction element assembly need be replaced, and the existing elastic plate can be salvaged and fitted with new supporting plates, each fitted with a respective friction element.

Each elastic tab 7 also has two locating holes 12, which are engaged by two locating teeth on respective supporting plate 3. Engagement of locating holes 12 by the locating teeth also prevents rotation of the friction element.

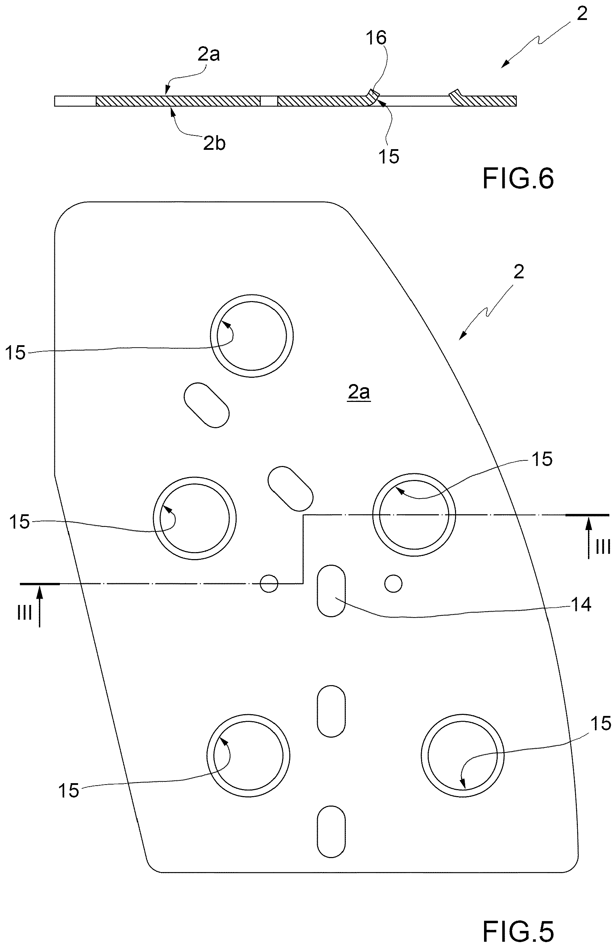

As shown in Figures 5 and 6, a first surface 2a of base plate 2 has a centre longitudinal portion 14, which is welded to centre rib 6 of elastic plate 5. Base plate 2 has five holes 15, each bounded by a raised edge 16 which acts as a retainer. As shown in Figure 2, each hole 15, in use, is positioned coaxial with a centre hole 8 of a respective elastic tab 7, and therefore coaxial with a fastening pin 9 and lock spring 11. Each hole 15 creates the necessary space in which to house fastening pin 9 and lock spring 11, and also defines an access opening by which to manoeuvre lock spring 11.

In actual use, a second surface 2b of base plate 2 is welded to a dovetail element by which to assemble it to the overall structure of the disk brake. The dovetail element must also have access openings, located at holes 15, for access to lock springs 11.

Using one elastic plate for a number of friction elements, as opposed to a number of elastic elements, one for each friction element, has been found to improve both braking performance and noise reduction.

Another advantage of the pad according to the present invention lies in the supporting plates being removable from the elastic plate, and in the elastic plate being re-usable, even when the friction elements are replaced.

Finally, as will be clear to anyone skilled in the art, using one, as opposed to a number of, elastic means for all the friction elements on the pad has important advantages, in terms of manufacture, cost, and assembly.

## Claims

1. A railway vehicle disk brake pad (1) comprising a base plate (2); and a number of friction elements (4) each one is fixed to a respective supporting plate (3); said pad being **characterized by** comprising only one elastic plate (5) interposed between said base plate (2) and all the supporting plates (3) and in turn comprising a centre rib (6) fixed to the base plate (2), and a number of elastic tabs (7) projecting from the centre rib (6) and detached from the base plate (2); each of said supporting plates (3) being fixed to a respective elastic tab (7).

2. A railway vehicle disk brake pad as claimed in Claim 1, **characterized in that** said centre rib (6) has a bend.

3. A railway vehicle disk brake pad as claimed in Claim 1 or 2, **characterized by** comprising reversible fastening means (8; 9; 10; 11) for fixing each of the supporting plates (3) reversibly to a respective elastic tab (7).

4. A railway vehicle disk brake pad as claimed in Claim 3, **characterized in that** each elastic tab (7) has one or more first holes (8), each for housing a fastening pin (9) for fastening a respective supporting plate (3); said fastening pin (9) having a radial groove (10) which is engaged by a lock spring (11).

5. A railway vehicle disk brake pad as claimed in Claim 4, **characterized in that** each elastic tab (7) has at least two locating holes (12), which are engaged respectively by at least two locating teeth on the respective supporting plate (3).

6. A railway vehicle disk brake pad as claimed in Claim 4, **characterized in that** the base plate (2) comprises a centre longitudinal portion (14), which is connected to the centre rib (6) of the elastic plate (5); and a number of second holes (15), each of which is coaxial with a first hole (8), engaged by the respective fastening pin (9), of a respective elastic tab (7).

7. A railway vehicle disk brake pad as claimed in Claim 6, **characterized in that** each second hole (15) is bounded by a raised edge (16) which acts as a retainer.

## Patentansprüche

1. Scheibenbremsbelag (1) für ein Schienenfahrzeug mit:
einer Grundplatte (2);
mehreren Reibungselementen (4), die jeweils an einer entsprechenden Trägerplatte (3) befestigt sind, wobei der Bremsbelag **dadurch gekennzeichnet ist, dass** er nur eine elastische Platte (5) aufweist, die zwischen der Grundplatte (2) und allen Trägerplatten (3) angeordnet ist; und
einer an der Grundplatte (2) befestigten Mittelrippe (6); und
mehreren elastischen Ansätzen (7), die von der Mittelrippe (6) hervorstehen und von der Grundplatte (2) beabstandet sind, wobei jede der Trägerplatten (3) an einem jeweiligen elastischen Ansatz (7) befestigt ist.

2. Scheibenbremsbelag nach Anspruch 1, **dadurch gekennzeichnet, dass** die Mittelrippe (6) eine Biegung aufweist.

3. Scheibenbremsbelag nach Anspruch 1 oder 2, **dadurch gekennzeichnet, dass** der Bremsbelag eine reversible Befestigungseinrichtung (8; 9; 10; 11) zum reversiblen Befestigen jeder der Trägerplatten (3) an einem entsprechenden elastischen Ansatz (7) aufweist.

4. Scheibenbremsbelag nach Anspruch 3, **dadurch gekennzeichnet, dass** jeder elastische Ansatz (7) ein oder mehrere erste Löcher (8) aufweist, die jeweils dafür vorgesehen sind, einen Befestigungsstift (9) zum Befestigen einer entsprechenden Trägerplatte (3) aufzunehmen, wobei jeder der Befestigungsstifte (9) eine radiale Nut (10) aufweist, mit der eine Sicherungsfeder (11) in Eingriff kommt.

5. Scheibenbremsbelag nach Anspruch 4, **dadurch gekennzeichnet, dass** jeder elastische Ansatz (7) mindestens zwei Positionierungslöcher (12) aufweist, mit denen jeweils mindestens zwei Positionierungszähne auf der jeweiligen Trägerplatte (3) in Eingriff kommen.

6. Scheibenbremsbelag nach Anspruch 4, **dadurch gekennzeichnet, dass** die Grundplatte (2) einen mittigen länglichen Abschnitt (14) aufweist, der mit der Mittelrippe (6) der elastischen Platte (5) verbunden ist, und mehrere zweite Löcher (15), die jeweils koaxial zu einem ersten Loch (8) eines jeweiligen elastischen Ansatzes (7) angeordnet sind und mit denen jeweils ein Befestigungsstift (9) in Eingriff kommt.

7. Scheibenbremsbelag nach Anspruch 6, **dadurch gekennzeichnet, dass** jedes zweite Loch (15) durch einen erhöhten Rand (16) begrenzt ist, der als eine Halterung dient.

## Revendications

1. Plaquette de frein à disque (1) de véhicule ferroviaire comprenant une plaque de base (2) ; et un certain nombre d'éléments de friction (4), dont chacun est fixé à une plaque de support (3) respective ; ladite plaquette étant **caractérisée en ce qu'**elle comprend seulement une plaque élastique (5) intercalée entre ladite plaque de base (2) et toutes les plaques de support (3) et comprenant à son tour une nervure centrale (6) fixée sur la plaque de base (2), et un certain nombre de languettes élastiques (7) faisant saillie de la nervure centrale (6) et détachées de la plaque de base (2) ; chacune desdites plaques de support (3) étant fixée à une languette élastique (7) respective.

2. Plaquette de frein à disque de véhicule ferroviaire selon la revendication 1, **caractérisée en ce que** ladite nervure centrale (6) a un coude.

3. Plaquette de frein à disque de véhicule ferroviaire selon la revendication 1 ou 2, **caractérisée en ce qu'**elle comprend des moyens de fixation réversibles (8 ; 9 ; 10 ; 11) pour fixer chacune des plaques de support (3) de manière réversible sur une languette élastique (7) respective.

4. Plaquette de frein à disque de véhicule ferroviaire selon la revendication 3, **caractérisée en ce que** chaque languette élastique (7) a un ou plusieurs premiers trous (8), chacun pour loger une broche de fixation (9) pour fixer une plaque de support (3) respective ; ladite broche de fixation (9) ayant une rainure radiale (10) qui est mise en prise par un ressort de verrouillage (11).

5. Plaquette de frein à disque de véhicule ferroviaire selon la revendication 4, **caractérisée en ce que** chaque languette élastique (7) a au moins deux trous de positionnement (12), qui sont respectivement mis en prise par au moins deux dents de positionnement sur la plaque de support (3) respective.

6. Plaquette de frein à disque de véhicule ferroviaire selon la revendication 4, **caractérisée en ce que** la plaque de base (2) comprend une partie longitudinale centrale (14), qui est raccordée à la nervure centrale (6) de la plaque élastique (5) ; et un certain nombre de seconds trous (15), dont chacun est coaxial par rapport à un premier trou (8), mis en prise par la broche de fixation (9) respective, d'une languette élastique (7) respective.

7. Plaquette de frein à disque de véhicule ferroviaire selon la revendication 6, **caractérisée en ce que** chaque second trou (15) est délimité par un bord relevé (16) qui sert de dispositif de retenue.
